(19) **Europäisches Patentamt / European Patent Office / Office européen des brevets**

(11) **EP 2 522 627 A1**

(12) **EUROPEAN PATENT APPLICATION**
published in accordance with Art. 153(4) EPC

(43) Date of publication:
**14.11.2012 Bulletin 2012/46**

(51) Int Cl.:
**C01B 33/18** (2006.01)   **C03B 20/00** (2006.01)

(21) Application number: **10842196.7**

(22) Date of filing: **21.12.2010**

(86) International application number:
**PCT/JP2010/072958**

(87) International publication number:
**WO 2011/083683 (14.07.2011 Gazette 2011/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.01.2010 JP 2010001802**

(71) Applicant: **Mitsubishi Materials Corporation Chiyoda-ku Tokyo 100-8117 (JP)**

(72) Inventor: **UEDA, Toshiaki Iwaki-shi Fukushima 971-8101 (JP)**

(74) Representative: **Gille Hrabal Patentanwälte Brucknerstrasse 20 40593 Düsseldorf (DE)**

(54) **SYNTHETIC AMORPHOUS SILICA POWDER**

(57)    The synthetic amorphous silica powder of the present invention is characterized in that it comprises a synthetic amorphous silica powder obtained by applying a spheroidizing treatment to a silica powder, and by subsequently firing it without cleaning; wherein the synthetic amorphous silica powder has: a quotient of 1. 93 or less obtained by dividing a BET specific surface area of the powder by a theoretical specific surface area calculated from an average particle diameter $D_{50}$; a real density of $2.10 g/cm^3$ or more; an intra-particulate porosity of 0.05 or less; a circularity of 0.50 or more; and a spheroidization ratio of 0.20 or more; and wherein the synthetic amorphous silica powder comprises particles each having a surface carrying fine silica powder particles attached thereto. This synthetic amorphous silica powder is less in amount of gas components adsorbed to surfaces of particles of the powder and in amount of gas components within the particles, so that a synthetic silica glass product manufactured by using the powder is remarkably decreased in amount of generation or degree of expansion of gas bubbles even upon usage of the product in a high temperature and reduced pressure environment.

FIG. 1

EP 2 522 627 A1

**Description**

TECHNICAL FIELD

The present invention relates to a synthetic amorphous silica powder with high purity and a method for producing the same, which silica powder is suitable as a raw material for manufacturing a synthetic silica glass product such as a piping, crucible, or the like to be used in a high temperature and reduced pressure environment in a semiconductor industry and the like.

BACKGROUND ART

Conventionally, crucibles, jigs, and the like to be used for single crystal production in semiconductor application have been manufactured from a quartz powder as a raw material obtained by pulverizing and purifying a natural quartz, quartz sand, or the like. However, the natural quartz, quartz sand, or the like contains various metal impurities which are not completely removed therefrom even by the purification treatment, so that the thus obtained raw material has not been fully satisfied in purity. In turn, progression of high integration of semiconductors has led to a more enhanced quality demand for single crystals as materials for the semiconductors, so that crucibles, jigs, and the like to be used for producing the single crystals are also demanded to have high purities,respectively. As such, attentionhasbeen directed to a synthetic silica glass product obtained by adopting, as a raw material, a synthetic amorphous silica powder with high purity instead of a natural quartz, quartz sand, or the like.
As a method for producing such a synthetic amorphous silica powder with high purity, there has been disclosed a method where silicon tetrachloride with high purity is hydrolyzed with water, and the generated silica gel is dried, sized, and fired, to obtain a synthetic amorphous silica powder (see Patent Document 1, for example) . Further, methods have been disclosed each configured to hydrolyze an alkoxysilane such as silicate in the presence of acid and alkali to thereby gelate the alkoxysilane, and to dry and pulverize the obtained gel, followed by firing to thereby obtain a synthetic amorphous silica powder (see Patent Documents 2 and 3, for example) . The synthetic amorphous silica powders produced by the methods described in the Patent Documents 1 to 3, respectively, are highly pure as compared to a natural quartz, quartz sand, and the like, thereby exemplarily enabling to: decrease entrained impurity contaminations in synthetic silica glass products such as crucibles, jigs, and the like manufactured from such synthetic amorphous silica powders as raw materials, respectively; and enhance performances of the products, respectively.

PRIOR ART DOCUMENT:

PATENT DOCUMENT:

Patent Document 1: Japanese Patent Publication No. 4-75848 (Claim 1)
Patent Document 2: Japanese Patent Application Laid-Open Publication No. 62-176929 (Claim 1)
Patent Document 3: Japanese Patent Application Laid-Open PublicationNo. 3-275527 (page 2, lower left column, line 7 to page 3, upper left column, line 6)

DISCLOSURE OF THE INVENTION

PROBLEM TO BE SOLVED BY THE INVENTION

However, those synthetic silica glass products manufactured from the synthetic amorphous silica powders as raw materials produced by the methods described in the Patent Documents 1 to 3, respectively, each have a drawback that the applicable synthetic silica glass product generates gas bubbles or the gas bubbles are expanded when the synthetic silica glass product is used in a high temperature and reduced pressure environment, in a manner to considerably deteriorate the performance of the synthetic silica glass product.
For example, crucibles for silicon single crystal pulling are each used in an environment at a high temperature of about 1, 500°C and at a reduced pressure of about 7,000Pa, such that the considerable deterioration of a performance of the crucible due to the aforementioned generation or expansion of gas bubbles has been a problem af fecting a quality of a pulled single crystal.
Against the above problem to be brought about upon usage in a high temperature and reduced pressure environment, it is conceivable to conduct such a countermeasure to lower a concentration of those impurities in a synthetic amorphous silica powder which possibly act as gas components: by applying a heat treatment to a synthetic amorphous silica powder obtained by hydrolysis of silicon tetrachloride, to thereby decrease respective concentrations of hydroxyl group and chlorine in the synthetic amorphous silica powder; or, by applying a heat treatment to a synthetic amorphous silica powder obtained from alkoxysilane by a sol-gel method, to thereby decrease respective concentrations of hydroxyl group and carbon in the synthetic amorphous silica powder.

However, even by the above countermeasure, it is impossible to sufficiently restrict generation or expansion of gas bubbles in a synthetic silica glass product to be used in a high temperature and reduced pressure environment.

It is therefore an object of the present invention to provide a synthetic amorphous silica powder, which overcomes the conventional problem and is suitable as a raw material for manufacturing a synthetic silica glass product which is less in amount of generation or degree of expansion of gas bubbles even upon usage of the product in a high temperature and reduced pressure environment.

MEANS FOR SOLVING PROBLEM

The first aspect of the present invention resides in a synthetic amorphous silica powder obtained by applying a spheroidizing treatment to a silica powder, and by subsequently firing it without cleaning; characterized in that the synthetic amorphous silica powder has:

a quotient of 1.93 or less obtained by dividing a BET specific surface area of the powder by a theoretical specific surface area calculated from an average particle diameter $D_{50}$;
a real density of 2.10g/cm$^3$ or more;
an intra-particulate porosity of 0.05 or less;
a circularity of 0.50 or more; and
a spheroidization ratio of 0.20 or more; and
that the synthetic amorphous silica powder comprises particles each having a surface carrying fine silica powder particles attached thereto.

EFFECT OF THE INVENTION

The synthetic amorphous silica powder according to the first aspect of the present invention is a synthetic amorphous silica powder obtained by applying a spheroidizing treatment to a silica powder, and by subsequently firing it without cleaning;
wherein the synthetic amorphous silica powder has:

a quotient of 1.93 or less obtained by dividing a BET specific surface area of the powder by a theoretical specific surface area calculated from an average particle diameter $D_{50}$;
a real density of 2.10g/cm$^3$ or more;
an intra-particulate porosity of 0.05 or less;
a circularity of 0.50 or more; and
a spheroidization ratio of 0.20 or more; and

wherein the synthetic amorphous silica powder comprises particles each having a surface carrying fine silica powder particles attached thereto.
Thus, by using this synthetic amorphous silica powder to manufacture a synthetic silica glass product, gas components adsorbed to surfaces of particles of a raw powder are less in amount and gas components inside the powder particles are also less in amount, thereby enabling to reduce an amount of generation or degree of expansion of gas bubbles.

BRIEF DESCRIPTION OF THE DRAWINGS

FIG. 1 is a photographic view of representative powder particles of a synthetic amorphous silica powder according to the present invention;
FIG. 2 is a process flow diagram showing a process for producing the synthetic amorphous silica powder according to the present invention;
FIG. 3 is a schematic cross-sectional view of a spheroidizing apparatus based on thermal plasma;
FIG. 4 is a schematic view of a particle size/shape distribution measuring device; and
FIG. 5 is a photographic view of representative silica powder particles which are not subjected to a spheroidizing treatment.

MODE(S) FOR CARRYING OUT THE INVENTION

The modes for carrying out the present invention will be explained hereinafter based on the accompanying drawings.

The synthetic amorphous silica powder according to the present invention is obtained by applying a spheroidizing treatment to a silica powder, and by subsequently firing it without cleaning. Further, the synthetic amorphous silica powder is characterized in that it has: a quotient of 1.93 or less obtained by dividing a BET specific surface area of the powder by a theoretical specific surface area calculated from an average particle diameter $D_{50}$; a real density of $2.10 \text{g/cm}^3$ or more; an intra-particulate porosity of 0.05 or less; a circularity of 0.50 or more; and a spheroidization ratio of 0.20 or more; and that the synthetic amorphous silica powder comprises particles each having a surface carrying fine silica powder particles attached thereto.

Conceivable as a main source of generation or expansion of gas bubbles in a synthetic silica glass product such as a crucible for a silicon single crystal pulling at a high temperature and a reduced pressure, is a gas adsorbed to surfaces of particles of a raw powder, which has been used for manufacturing a product. Namely, upon manufacturing a synthetic silica glass product, gas components adsorbed to surfaces of particles of the raw powder are desorbed therefrom upon melting of the particles as one step of manufacturing. Further, the thus desorbed gas components are left in the synthetic silica glass product, in a manner to act as a source of generation or expansion of gas bubbles.

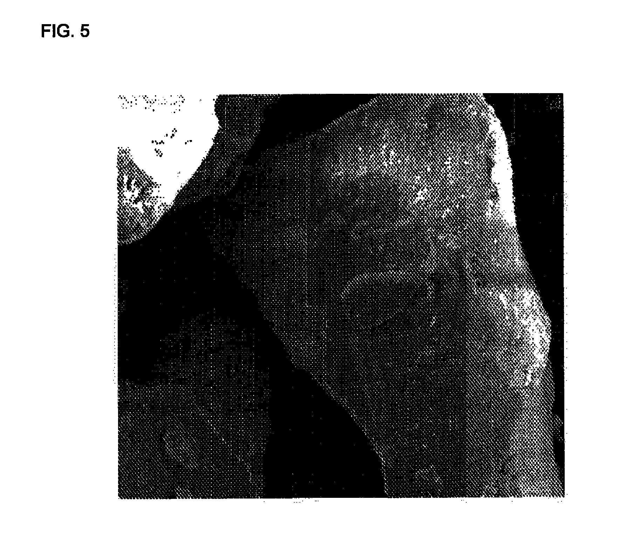

It is typical, for a silica powder to be used as a raw material of a synthetic silica glass product, that the powder is passed through a pulverizing step, so that the silica powder contains numerous particles in indeterminate forms (pulverized powder particle forms), respectively, as shown in FIG. 5. Thus, the silica powder is considered to be increased in specific surface area, thereby increasing an inevitable gas adsorption amount.

As such, the synthetic amorphous silica powder of the present invention is made to have a quotient in the above range obtained by dividing a BET specific surface area of the powder by a theoretical specific surface area calculated from the average particle diameter $D_{50}$, by applying the spheroidizing treatment to the powder. The BET specific surface area is a value measured by a BET three-point method. Further, it is possible to calculate a theoretical specific surface area of particles from the following equation (1), supposing that the particles are true spheres, respectively, and surfaces thereof are smooth. In the equation (1), D represents a diameter of a particle, and p represents a real density.

$$\texttt{Theoretical specific surface area=6/(D×ρ)} \qquad \texttt{(1)}$$

In the present specification, the theoretical specific surface area of a powder is a value calculated from a theoretical real density, by assuming that D is an average particle diameter $D_{50}$ of the powder, and $\rho$ is a real density of $2.20 \text{g/cm}^3$ in the following equation (1). Namely, the theoretical specific surface area of a powder is calculated from the following equation (2).

$$\texttt{Theoretical specific surface area of powder=2.73/D}_{\textbf{50}}$$

$$\texttt{(2)}$$

Quotients exceeding 1.93 obtained by dividing BET specific surface areas by theoretical specific surface areas calculated from average particle diameters $D_{50}$, lead to larger specific surface areas, thereby increasing inevitable gas adsorption amounts. In the above, the quotient is preferably 1.70 or less, and particularly preferably within a range of 1.00 to 1.50.

Further, the synthetic amorphous silica powder has a circularity of 0.50 or more. The circularity means that powder particles approachingly resemble true spheres as the circularity approaches 1.00, and the circularity is calculated from the following equation (3).

$$\texttt{Circularity=4πS/L}^{\textbf{2}} \qquad \texttt{(3)}$$

in the equation (3), S represents an area of a particle in a projection view, and L represents a perimeter of the particle in the projection view. In the present specification, the circularity of the powder is an average value of circularities of 200 powder particles calculated from the equation (3) . Circularities of powder less than 0.50 lead to lower effects for reducing amounts of generation or degrees of expansion of gas bubbles. In the above, the circularity of the powder is preferably within a range of 0.80 to 1.00. Furthermore, the synthetic amorphous silica powder has a spheroidization ratio of 0.20 or more. The spheroidization ratio of a powder means a ratio at which those particles having circularities of 0.60 to 1.00 are contained in a powder in a predetermined amount. Spheroidization ratios less than 0.20 lead to lower effects for reducing amounts of generation or degrees of expansion of gas bubbles. In the above, the spheroidization ratio of the powder is preferably within a range of 0.80 to 1.00.

Moreover, considering a single particle of the synthetic amorphous silica powder, it is preferable that the particle is free of presence of interior spaces therein such as voids, closedcracks, and the like. Namely, a space (s) present inside the particle of synthetic amorphous silica powder act (s) as a source of generation or expansion of gas bubbles in a synthetic silica glass product. As such, the real density is to be $2.10 g/cm^3$ or more, and preferably 2.15 to $2.20 g/cm^3$. The real density means an average value of true densities obtained by conducting a real density measurement three times in conformity to JIS R7212: Testing Methods for Carbon Blocks, (d) Measurement of absolute specific gravity. Further, the intra-particulate porosity is to be 0.05 or less, preferably 0.01 or less. The intra-particulateporositymeans an average value calculated from the following equation (4) based on 50 powder particles, by measuring a cross-sectional area of each particle, and an area of a space in the particle, if present, upon observing the cross section of the particle by a SEM (scanning electron microscope):

$$\textbf{Intra-particulate porosity=total area of spaces in}$$

$$\textbf{particles/total cross-sectional area of particles} \quad \textbf{(4)}$$

In turn, the average particle diameter $D_{50}$ of the synthetic amorphous silica powder is to be preferably within a range of 50 to $1,000\mu m$. This is because, average particle diameters smaller than the lower limit value lead to smaller spaces among powder particles such that gases present in the spaces scarcely leave therefrom and thus smaller gas bubbles are likely to be left there, while averaged particle sizes exceeding the upper limit value lead to excessively larger spaces among powder particles such that larger gas bubbles are likely to be left there. In the above, the average particle diameter $D_{50}$ is particularly preferably within a range of 80 to $600\mu m$. In the present specification, the average particle diameter $D_{50}$ means an average value of medians of particle distributions (diameter) measured three times by Laser Diffraction/Scattering Particle Size Distribution Analyzer (Model Name: HORIBALA-950) . Thebulkdensityof the synthetic amorphous silica powder is preferably $1.00 g/cm^3$ or more. This is because, bulk densities smaller than the lower limit value lead to excessively larger spaces among powder particles such that larger gas bubbles are likely to be left there, while bulk densities exceeding the upper limit value lead to smaller spaces among powder particles such that gases present in the spaces scarcely leave therefrom and thus smaller gas bubbles are likely to be left there. In the above, the bulk density is particularly preferably within a range of 1.20to1.40g/cm$^3$.

To uniformalize meltabilities of powders, it is preferable that each powder has a broad diffraction peak and no crystalline silica powder particles are recognized therein when the powder is measured by a powder X-ray diffractometry using a Cu-K$\alpha$ line. This is because, amorphous silica is different from crystalline silica in behavior of melting, in such a tendency that melting of the crystalline silica is belatedly started; so that gas bubbles are likely to be left in a synthetic silica glass product or the like when the synthetic silica glass product is manufactured by a synthetic amorphous silica powder containing amorphous and crystalline silicas in a mixed manner.

So as to decrease amounts of impurities in a synthetic silica glass product or so as to improve a performance of the product, the synthetic amorphous silica powder is to preferably have such an impurity concentration that concentrations are less than 1ppm, respectively, for elements belonging to the 1A group, 2A to 8 groups, 1B to 3B groups except for a hydrogen atom, for elements belonging to the 4B group and 5B group except for carbon and silicon, for elements belonging to the 6B group except for oxygen, and for elements belonging to the 7B group except for chlorine. In the above, the impurity concentrations are particularly preferably less than 0.05ppm, respectively. Further, to restrict generation or expansion of gas bubbles in a synthetic silica glass product at a high temperature and a reduced pressure, it is preferable that a hydroxyl group, chlorine, and carbon, which possibly act as gas components, respectively, are 50ppm or less, 2ppm or less, and 10ppm or less, respectively, in concentration.

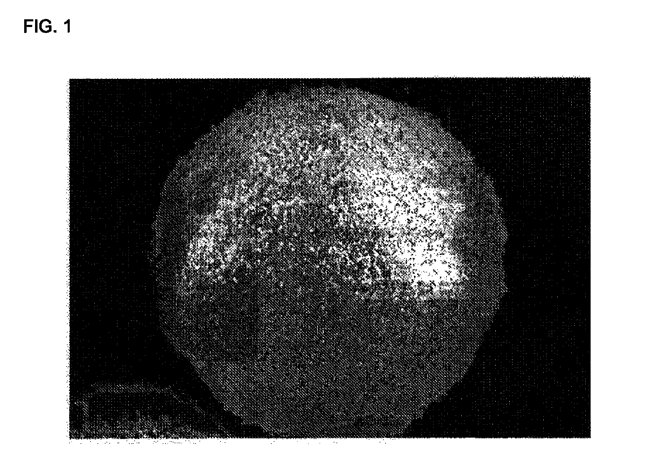

The synthetic amorphous silica powder of the present invention is obtained by applying a spheroidizing treatment to a silica powder, and by subsequently firing it without cleaning. As such, the synthetic amorphous silica powder comprises particles each having a surface carrying fine silica powder particles attached thereto, as shown in FIG. 1. Nonetheless, the synthetic amorphous silica powder exhibits the above properties by virtue of the spheroidizing treatment, thereby decreasing the inevitable gas adsorption amount. The fine silica powder has an average particle diameter $D_{50}$ of 0.001 to $0.1\mu m$.

Next will be explained a method for producing the synthetic amorphous silica powder of the present invention.

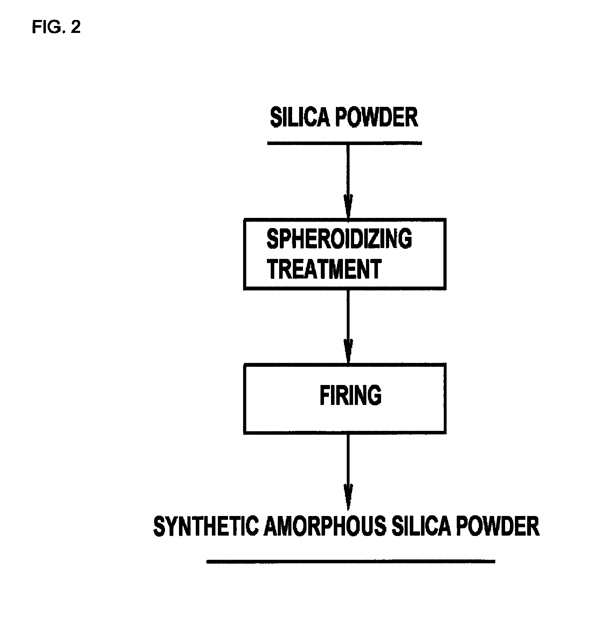

The method for producing a synthetic amorphous silica powder according to the present invention is conducted as shown in FIG. 2, by applying a spheroidizing treatment to a silica powder to be used as a raw material, and by subsequently firing it. The respective steps will be explained in detail hereinafter.

The silica powder to be used as a raw material of the synthetic amorphous silica powder of the present invention is obtainable by the following techniques, for example. As a first technique, ultrapure water in an amount equivalent to 45 to 80mols is firstly prepared per 1mol of silicon tetrachloride. The prepared ultrapure water is charged into a vessel, and then the silicon tetrachloride is added thereinto, with stirring while keeping the temperature at 20 to 45°C in an atmosphere of nitrogen, argon, or the like, thereby hydrolyzing the silicon tetrachloride. After addition of the silicon tetrachloride, stirring is continued for 0.5 to 6 hours, thereby producing a siliceous gel. At this time, it is preferable to set the stirring speed within a range of 100 to 300rpm. Next, the siliceous gel is transferred into a container for drying which is brought into a drier, and the siliceous gel is dried for 12 to 48 hours at a temperature of 200°C to 300°C while flowing nitrogen, argon, or the like through within the drier preferably at a flow rate of 10 to 20L/min, thereby obtaining a dry powder. This dry powder is then taken out of the drier, and pulverized by a crusher such as a roll crusher. In case of adopting a roll crusher, pulverizing is conducted by appropriately adjusting a roll gap to 0.2 to 2.0mm and a roll revolution speed to 3 to 200rpm. Finally, the pulverized particles of the dry powder are classified by using a vibrating screen or the like, thereby obtaining a silica powder preferably having an average particle diameter $D_{50}$ of 70 to 1,300$\mu$m.

As a second technique, 0.5 to 3mols of ultrapure water and 0.5 to 3mols of ethanol are prepared per 1mol of tetramethoxysilane as an organic silicon compound. The prepared ultrapure water and ethanol are charged into a vessel, and then the tetramethoxysilane is added thereinto, with stirring while keeping the temperature at 60°C in an atmosphere of nitrogen, argon, or the like, thereby hydrolyzing the tetramethoxysilane. After addition of the tetramethoxysilane, stirring is continued for 5 to 120 minutes, and 1 to 50mols of ultrapure water is further added thereinto per 1mol of tetramethoxysilane, followed by continued stirring for 1 to 12 hours, thereby producing a siliceous gel. At this time, it is preferable to set the stirring speed within a range of 100 to 300rpm. Next, the siliceous gel is transferred into a container for drying which is brought into a drier, and the siliceous gel is dried for 6 to 48 hours at a temperature of 200°C to 300°C while flowing nitrogen, argon, or the like through within the drier preferably at a flow rate of 1 to 20L/min, thereby obtaining a dry powder. This dry powder is then taken out of the drier, and pulverized by a crusher such as a roll crusher. In case of adopting a roll crusher, pulverizing is conducted by appropriately adjusting a roll gap to 0.2 to 2.0mm and a roll revolution speed to 3 to 200rpm. Finally, the pulverized particles of the dry powder are classified by using a vibrating screen or the like, thereby obtaining a silica powder preferably having an average particle diameter $D_{50}$ of 70 to 1,300$\mu$m.

As a third technique, 9.5 to 20.0mols of ultrapure water is firstly prepared per 1mol of fumed silica having an average particle diameter $D_{50}$ of 0.007 to 0.030$\mu$m and a specific surface area of 50 to 380$m^2$/g. The prepared ultrapure water is charged into a vessel, and then the fumed silica is added thereinto, with stirring while keeping the temperature at 20 to 45°C in an atmosphere of nitrogen, argon, or the like. After addition of the fumed silica, stirring is continued for 0.5 to 6 hours, thereby producing a siliceous gel. At this time, it is preferable to set the stirring speed within a range of 10 to 50rpm. Next, the siliceous gel is transferred into a container for drying which is brought into a drier, and the siliceous gel is dried for 6 to 48 hours at a temperature of 200°C to 300°C while flowing nitrogen, argon, or the like through within the drier preferably at a flow rate of 1 to 20L/min, thereby obtaining a dry powder. This dry powder is then taken out of the drier, and pulverized by a crusher such as a roll crusher. In case of adopting a roll crusher, pulverizing is conducted by appropriately adjusting a roll gap to 0.2 to 2.0mm and a roll revolution speed to 3 to 200rpm. Finally, the pulverized particles of the dry powder are classified by using a vibrating screen or the like, thereby obtaining a silica powder preferably having an average particle diameter $D_{50}$ of 70 to 1,300$\mu$m.

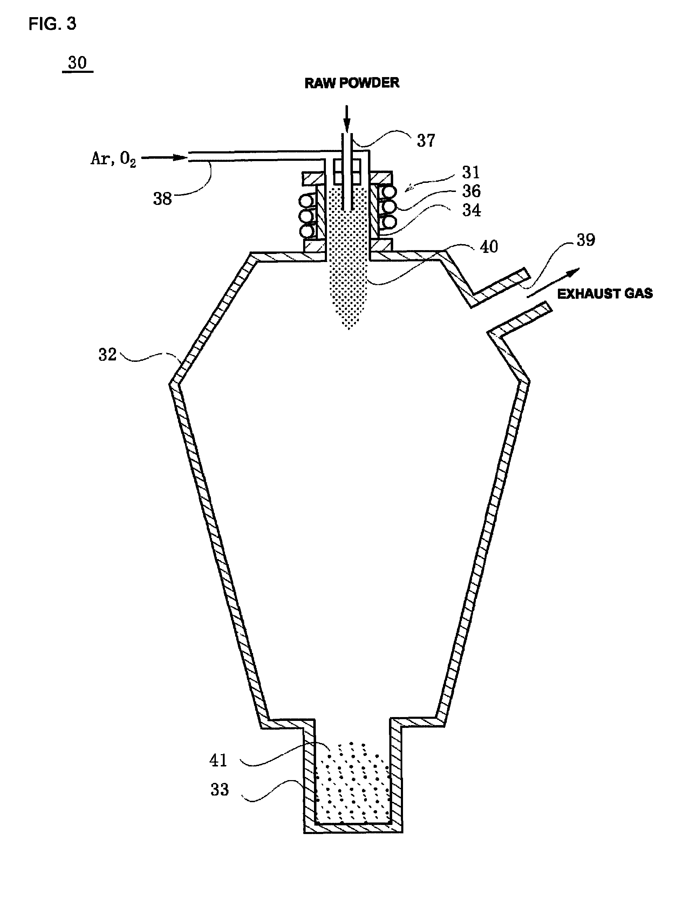

As a technique for spheroidizing particles of the silica powders obtained by the first to third techniques, it is enough to adopt a technique to heat the applicable powder particles to a temperature of 2,000°C or higher to melt them, in a manner to utilize surface tensions of melted particles to thereby spheroidize shapes of powder particles after solidification, respectively. Examples of such a technique include a thermal plasma method, a flaming method, a melting-dropping method, and the like. Herein will be described a spheroidizing treatment technique based on thermal plasma. In the spheroidizing treatment based on thermal plasma, it is possible to use an apparatus shown in FIG. 3, for example. This apparatus 30 comprises a plasma torch 31 for generating plasma, a chamber 32 as a reaction tube provided at a lower portion of the plasma torch 31, and a collecting portion 33 provided at a lower portion of the chamber 32 so as to collect a powder after treatment. The plasma torch 31 has: a quartz tube 34 communicated with the chamber 32 and sealed at a top portion; and a high-frequency inductive coil 36 wound around the quartz tube 34. The quartz tube 34 has an upper portion, which is provided with a raw material supplying tube 37 therethrough, and connected with a gas introducing tube 38. The chamber 32 is provided at its lateral side with a gas exhaust port 39. In the plasma torch 31, energization of the high-frequency inductive coil 36 generates a plasma 40, and the quartz tube 34 is supplied with a gas such as argon, oxygen, or the like from the gas introducing tube 38. Further, supplied into the plasma 40 is a raw powder through the raw material supplying tube 37. The gas within the chamber 32 is exhausted from the gas exhaust port 39 provided at the lateral side of the chamber 32, Firstly, argon as a working gas is introduced from the gas introducing tube 38 of the apparatus 30 at a flow rate of 15 to 60L/min, while applying a high frequency wave at a frequency of 3 to 5MHz and at a power of 3 0 to 120kW to the plasma torch 31, thereby generating a plasma. After the plasma is stabilized, oxygen is gradually introduced at a flow rate of 20 to 120L/min, thereby causing generation of an argon-oxygenplasma. Then, the silica powder obtained by any one of the first to third techniques is delivered from the raw material supplying tube 37 into the argon-oxygen plasma at a supplying rate of 1.5 to 20kg/hr to thereby melt the silica powder, such that particles now made into melted bodies are caused to fall and collected by the collecting portion 33, thereby enabling to obtain spheroidized silica powder particles 41.

The silica powder after the spheroidizing treatment is fired without cleaning it. Namely, the powder after the spheroidizing treatment is firstlyput into a vessel for firing, and then the vessel for firing is brought into an electric furnace, i.e., into a firing furnace capable of controlling an atmosphere therein. The firing condition is to be preferably set at 1,100°C to 1,500°C for 12 to 48 hours while flowing oxygen, dry air, or the like at a flow rate of 1 to 20L/min.

By the above steps, the synthetic amorphous silica powder of the present invention is obtained. This synthetic amorphous silica powder is less in inevitable gas adsorption amount, so that the powder is preferably usable as a raw material of a synthetic silica glass product.

Examples

Next, Examples of the present invention will be explained in detail, together with Comparative Examples.

<Example 1>

Firstly, ultrapure water was prepared in an amount equivalent to 55.6mols, per 1mol of silicon tetrachloride. This ultrapure water was brought into a vessel, and then the silicon tetrachloride was added thereinto, with stirring while keeping the temperature at 25°C in an atmosphere of nitrogen, thereby hydrolyzing the silicon tetrachloride. After addition of the silicon tetrachloride, stirring was continued for 3 hours, thereby producing a siliceous gel. At this time, the stirring speed was set to be 150rpm. Next, the siliceous gel was transferred into a container for drying which was brought into a drier, and the siliceous gel was dried for 18 hours at a temperature of 250°C while flowing nitrogen through within the drier at a flow rate of 15L/min, thereby obtaining a dry powder. This dry powder was then taken out of the drier, and pulverized by a roll crusher. At this time, pulverizing was conducted by adjusting a roll gap to 0.2mm and a roll revolution speed to 50rpm. The pulverized particles of the dry powder were classified by using a vibrating screen having openings of $75\mu m$ and a vibrating screen having openings of $125\mu m$, thereby obtaining a silica powder having an average particle diameter $D_{50}$ of $112\mu m$.

Subsequently, the apparatus 30 shown in FIG. 3 was used to apply a spheroidizing treatment to the above obtained silica powder under an applicable condition shown in Table 1 described below. Specifically, argon as a working gas was introduced from the gas introducing tube 38 of the apparatus 30, and a high frequency wave was applied to the plasma torch 31 to generate a plasma. After the plasma was stabilized, oxygen was gradually introduced, thereby causing generation of an argon-oxygen plasma. Then, the above obtained silica powder was delivered from the raw material supplying tube 37 into the argon-oxygen plasma to thereby melt the silica powder, such that particles now made into melted bodies were caused to fall and collected by the collecting portion 33, thereby obtaining spheroidized silica powder particles 41.

After the spheroidizing treatment, the powder was put into a vessel for firing, without cleaning the powder, and then the vessel for firing is brought into a firing furnace, in a manner to hold the powder at a temperature of 1,250°C for 48 hours while flowing nitrogen at a flow rate of 10L/min through within the firing furnace, thereby obtaining a synthetic amorphous silica powder comprising particles each having a surface carrying fine silica powder particles attached thereto.

<Example 2>

Firstly, 1mol of ultrapure water and 1mol of ethanol were prepared per 1mol of tetramethoxysilane. The prepared ultrapure water and ethanol were charged into a vessel, and then the tetramethoxysilane was added thereinto, with stirring while keeping the temperature at 60°C in an atmosphere of nitrogen, thereby hydrolyzing the tetramethoxysilane. After addition of the tetramethoxysilane, stirring was continued for 60 minutes, and 25mols of ultrapure water was further added thereinto per 1mol of tetramethoxysilane, followed by continued stirring for 6 hours, thereby producing a siliceous gel. At this time, the stirring speed was set to be 100rpm. Next, the siliceous gel was transferred into a container for drying which was brought into a drier, and the siliceous gel was dried for 24 hours at a temperature of 200°C while flowing nitrogen through within the drier at a flow rate of 20L/min, thereby obtaining a dry powder. This dry powder was then taken out of the drier, and pulverized by a roll crusher. At this time, pulverizing was conducted by adjusting a roll gap to 0.2mm and a roll revolution speed to 55rpm. The pulverized particles of the dry powder were classified by using a vibrating screen having openings of $100\mu m$ and a vibrating screen having openings of $150\mu m$, thereby obtaining a silica powder having an average particle diameter $D_{50}$ of $120\mu m$.

Subsequently, the apparatus 30 shown in FIG. 3 was used to apply a spheroidizing treatment to the above obtained silica powder under an applicable condition shown in Table 1 described below. Specifically, argon as a working gas was introduced from the gas introducing tube 38 of the apparatus 30, and a high frequency wave was applied to the plasma torch 31 to generate a plasma. After the plasma was stabilized, oxygen was gradually introduced, thereby causing generation of an argon-oxygen plasma. Then, the above obtained silica powder was delivered from the raw material supplying tube 37 into the argon-oxygen plasma to thereby melt the silica powder, such that particles now made into melted bodies were caused to fall and collected by the collecting portion 33, thereby obtaining spheroidized silica powder particles 41.

After the spheroidizing treatment, the powder was put into a vessel for firing, without cleaning the powder, and then the vessel for firing was brought into a firing furnace, in a manner to hold the powder at a temperature of 1,300°C for 24 hours while flowing nitrogen at a flow rate of 15L/min through within the firing furnace, thereby obtaining a synthetic amorphous silica powder comprising particles each having a surface carrying fine silica powder particles attached thereto.

<Example 3>

Firstly, 13mols of ultrapure water was prepared per 1mol of fumed silica having an average particle diameter $D_{50}$ of 0.020$\mu$m and a specific surface area of 90m$^2$/g. The prepared ultrapure water was charged into a vessel, and then the fumed silica was added thereinto, with stirring while keeping the temperature at 25°C in an atmosphere of nitrogen. After addition of the fumed silica, stirring was continued for 3 hours, thereby producing a siliceous gel. At this time, the stirring speed was set to be 30rpm. Next, the siliceous gel was transferred into a container for drying which was brought into a drier, and the siliceous gel was dried for 12 hours at a temperature of 300°C while flowing nitrogen through within the drier at a flow rate of 10L/min, thereby obtaining a dry powder. This dry powder was then taken out of the drier, and pulverized by a roll crusher. At this time, pulverizing was conducted by adjusting a roll gap to 0.5mm and a roll revolution speed to 30rpm. The pulverized particles of the dry powder were classified by using a vibrating screen having openings of 375$\mu$m and a vibrating screen having openings of 450$\mu$m, thereby obtaining a silica powder having an average particle diameter $D_{50}$ of 417$\mu$m.

Subsequently, the apparatus 30 shown in FIG. 3 was used to apply a spheroidizing treatment to the above obtained silica powder under an applicable condition shown in Table 1 described below. Specifically, argon as a working gas was introduced from the gas introducing tube 38 of the apparatus 30, and a high frequency wave was applied to the plasma torch 31 to generate a plasma. After the plasma was stabilized, oxygen was gradually introduced, thereby causing generation of an argon-oxygen plasma. Then, the above obtained silica powder was delivered from the raw material supplying tube 37 into the argon-oxygen plasma to thereby melt the silica powder, such that particles now made into melted bodies were caused to fall and collected by the collecting portion 33, thereby obtaining spheroidized silica powder particles 41.

After the spheroidizing treatment, the powder was put into a vessel for firing, without cleaning the powder, and then the vessel for firing was brought into a firing furnace, in a manner to hold the powder at a temperature of 1,200°C for 48 hours while flowing oxygen at a flow rate of 15L/min through within the firing furnace, thereby obtaining a synthetic amorphous silica powder comprising particles each having a surface carrying fine silica powder particles attached thereto.

<Example 4>

Conducted was the same procedure as Example 1 to obtain a synthetic amorphous silica powder comprising particles each having a surface carrying fine silica powder particles attached thereto, except that the spheroidizing treatment was applied to this silica powder under an applicable condition shown in Table 1 described below, and the obtained silica powder had an average particle diameter $D_{50}$ of 907$\mu$m.

<Comparative Example 1>

Firstly, ultrapure water was prepared in an amount equivalent to 55.6mols, per 1mol of silicon tetrachloride. This ultrapure water was brought into a vessel, and then the silicon tetrachloride was added thereinto, with stirring while keeping the temperature at 25°C in an atmosphere of nitrogen, thereby hydrolyzing the silicon tetrachloride. After addition of the silicon tetrachloride, stirring was continued for 3 hours, thereby producing a siliceous gel. At this time, the stirring speed was set to be 150rpm. Next, the siliceous gel was transferred into a container for drying which was brought into a drier, and the siliceous gel was dried for 18 hours at a temperature of 250°C while flowing nitrogen through within the drier at a flow rate of 15L/min, thereby obtaining a dry powder. This dry powder was then taken out of the drier, and pulverized by a roll crusher. At this time, pulverizing was conducted by adjusting a roll gap to 0.2mm and a roll revolution speed to 50rpm. The pulverized particles of the dry powder were classified by using a vibrating screen having openings of 75$\mu$m and a vibrating screen having openings of 125$\mu$m, thereby obtaining a silica powder having an average particle

diameter $D_{50}$ of 112$\mu$m.

Subsequently, the apparatus 30 shown in FIG. 3 was used to apply a spheroidizing treatment to the above obtained silica powder under an applicable condition shown in Table 1 described below. Specifically, argon as a working gas was introduced from the gas introducing tube 38 of the apparatus 30, and a high frequency wave was applied to the plasma torch 31 to generate a plasma. After the plasma was stabilized, oxygen was gradually introduced, thereby causing generation of an argon-oxygen plasma. Then, the above obtained silica powder was delivered from the raw material supplying tube 37 into the argon-oxygen plasma to thereby melt the silica powder, such that particles now made into melted bodies were caused to fall and collected by the collecting portion 33, thereby obtaining spheroidized silica powder particles 41.

After the spheroidizing treatment, the powder and ultrapure water were put into a cleaning vessel, to conduct ultrasonic cleaning. After conducting the ultrasonic cleaning, filtration was conducted by a filter having openings of 75$\mu$m. This operation was conducted repetitively until fine particles attached to surfaces of the silica powder particles were fully filtered out.

Finally, the cleaned powder was charged into a container for drying, then the container for drying was brought into a drier, and drying was conducted by flowing nitrogen at a flow rate of 10L/min through within the drier, and by holding the powder at a temperature of 200°C for 48 hours, thereby obtaining a synthetic amorphous silica powder comprising particles each having a surface without carrying fine silica powder particles attached thereto.

<Comparative Example 2>

Firstly, 1mol of ultrapure water and 1mol of ethanol were prepared per 1mol of tetramethoxysilane. The prepared ultrapure water and ethanol were charged into a vessel, and then the tetramethoxysilane was added thereinto, with stirring while keeping the temperature at 60°C in an atmosphere of nitrogen, thereby hydrolyzing the tetramethoxysilane. After addition of the tetramethoxysilane, stirring was continued for 60 minutes, and 25mols of ultrapure water was further added thereinto per 1mol of tetramethoxysilane, followed by continued stirring for 6 hours, thereby producing a siliceous gel. At this time, the stirring speed was set to be 100rpm. Next, the siliceous gel was transferred into a container for drying which was brought into a drier, and the siliceous gel was dried for 24 hours at a temperature of 200°C while flowing nitrogen through within the drier at a flow rate of 20L/min, thereby obtaining a dry powder. This dry powder was then taken out of the drier, and pulverized by a roll crusher. At this time, pulverizing was conducted by adjusting a roll gap to 0.2mm and a roll revolution speed to 55rpm. The pulverized particles of the dry powder were classified by using a vibrating screen having openings of 100$\mu$m and a vibrating screen having openings of 150$\mu$m, thereby obtaining a silica powder having an average particle diameter $D_{50}$ of 120$\mu$m.

Subsequently, the apparatus 30 shown in FIG. 3 was used to applya spheroidizing treatment to the above obtained silica powder under an applicable condition shown in Table 1 described below. Specifically, argon as a working gas was introduced from the gas introducing tube 38 of the apparatus 30, and a high frequency wave was applied to the plasma torch 31 to generate a plasma. After the plasma was stabilized, oxygen was gradually introduced, thereby causing generation of an argon-oxygen plasma. Then, the above obtained silica powder was delivered from the raw material supplying tube 37 into the argon-oxygen plasma to thereby melt the silica powder, such that particles now made into melted bodies were caused to fall and collected by the collecting portion 33, thereby obtaining spheroidized silica powder particles 41.

After the spheroidizing treatment, the powder and ultrapure water were put into a cleaning vessel, to conduct ultrasonic cleaning. After conducting the ultrasonic cleaning, f iltrat ion was conducted by a filter having openings of 100$\mu$m. This operation was conducted repetitively until fine particles attached to surfaces of the silica powder particles were fully filtered out.

Finally, the powder after cleaning was charged into a container for drying, then the container for drying was brought into a drier, and drying was conducted by flowing argon at a flow rate of 10L/min through within the drier, and by holding the powder at a temperature of 300°C for 12 hours, thereby obtaining a synthetic amorphous silica powder comprising particles each having a surface without carrying fine silica powder particles attached thereto.

<Comparative Example 3>

Firstly, 13mols of ultrapure water was prepared per 1mol of fumed silica having an average particle diameter. $D_{50}$ of 0.020$\mu$m and a specific surface area of 90m$^2$/g. The prepared ultrapure water was charged into a vessel, and then the fumed silica was added thereinto, with stirring while keeping the temperature at 25°C in an atmosphere of nitrogen. After addition of the fumed silica, stirring was continued for 3 hours, thereby producing a siliceous gel. At this time, the stirring speed was set to be 30rpm. Next, the siliceous gel was transferred into a container for drying which was brought into a drier, and the siliceous gel was dried for 12 hours at a temperature of 3 00°C while flowing nitrogen through within the drier at a flow rate of 10L/min, thereby obtaining a dry powder. This dry powder was then taken out of the drier, and pulverized by a roll crusher. At this time, pulverizing was conducted by adjusting a roll gap to 0.5mm and a roll revolution speed to 30rpm. The pulverized particles of the dry powder were classified by using a vibrating screen having openings of 375μm and a vibrating screen having openings of 450μm, thereby obtaining a silica powder having an average particle diameter $D_{50}$ of 417μm.

Subsequently, the apparatus 30 shown in FIG. 3 was used to apply a spheroidizing treatment to the above obtained silica powder under an applicable condition shown in Table 1 described below. Specifically, argon as a working gas was introduced from the gas introducing tube 38 of the apparatus 30, and a high frequency wave was applied to the plasma torch 31 to generate a plasma. After the plasma was stabilized, oxygen was gradually introduced, thereby causing generation of an argon-oxygen plasma. Then, the above obtained silica powder was delivered from the raw material supplying tube 37 into the argon-oxygen plasma to thereby melt the silica powder, such that particles now made into melted bodies were caused to fall and collected by the collecting portion 33, thereby obtaining spheroidized silica powder particles 41.

After the spheroidizing treatment, the powder and ultrapure water were put into a cleaning vessel, to conduct ultrasonic cleaning. After conducting the ultrasonic cleaning, filtration was conducted by a filter having openings of 375μm. This operation was conducted repetitively until fine particles attached to surfaces of the silica powder particles were fully filtered out.

Finally, the powder after cleaning was charged into a container for drying, then the container for drying was brought into a drier, and drying was conducted by flowing nitrogen at a flow rate of 20L/min through within the drier, and by holding the powder at a temperature of 200°C for 36 hours, thereby obtaining a synthetic amorphous silica powder comprising particles each having a surface without carrying fine silica powder particles attached thereto.

<Comparative Example 4>

Conducted was the same procedure as Comparative Example 3 to obtain a synthetic amorphous silica powder, except that the spheroidizing treatment was applied under an applicable condition shown in Table 1 described below.

<Comparative Example 5>

Conducted was the same procedure as Comparative Example 1 to obtain a synthetic amorphous silica powder, except that the spheroidizing treatment was applied to this silica powder under an applicable condition shown in Table 1 describedbelow, and the obtained silica powder had an average particle diameter $D_{50}$ of 907μm.

<Comparative Example 6>

Firstly, ultrapure water was prepared in an amount equivalent to 55.6mols, per 1mol of silicon tetrachloride. This ultrapure water was brought into a vessel, and then the silicon tetrachloride was added thereinto, with stirring while keeping the temperature at 25°C in an atmosphere of nitrogen, thereby hydrolyzing the silicon tetrachloride. After addition of the silicon tetrachloride, stirring was continued for 3 hours, thereby producing a siliceous gel. At this time, the stirring speed was set to be 150rpm. Next, the siliceous gel was transferred into a container for drying which was brought into a drier, and the siliceous gel was dried for 18 hours at a temperature of 250°C while flowing nitrogen through within the drier at a flow rate of 15L/min, thereby obtaining a dry powder. This dry powder was then taken out of the drier, and pulverized by a roll crusher. At this time, pulverizing was conducted by adjusting a roll gap to 0.2mm and a roll revolution speed to 50rpm. The pulverized particles of the dry powder were classified by using a vibrating screen having openings of 50μm and a vibrating screen having openings of 150μm, thereby obtaining a silica powder having an average particle diameter $D_{50}$ of 100μm.

Finally, the pulverized powder was charged into a vessel for firing, then the vessel for firing was brought into a firing furnace, and firing was conducted by flowing nitrogen at a flow rate of 10L/min through within the firing furnace, and by holding the powder at a temperature of 1,200°C for 48 hours, thereby obtaining a synthetic amorphous silica powder. This silica powder without applying a spheroidizing treatment thereto, was made to be Comparative Example 6.

<Comparative Example 7>

Firstly, 1mol of ultrapure water and 1mol of ethanol were prepared per 1mol of tetramethoxysilane. The prepared ultrapure water and ethanol were charged into a vessel, and then the tetramethoxysilane was added thereinto, with stirring while keeping the temperature at 60°C in an atmosphere of nitrogen, thereby hydrolyzing the tetramethoxysilane. After addition of the tetramethoxysilane, stirring was continued for 60 minutes, and 25mols of ultrapure water was further added thereinto per 1mol of tetramethoxysilane, followed by continued stirring for 6 hours, thereby producing a siliceous gel. At this time, the stirring speed was set to be 100rpm. Next, the siliceous gel was transferred into a container for drying which was brought into a drier, and the siliceous gel was dried for 24 hours at a temperature of 200°C while flowing nitrogen through within the drier at a flow rate of 20L/min, thereby obtaining a dry powder. This dry powder was then taken out of the drier, and pulverized by a roll crusher. At this time, pulverizing was conducted by adjusting a roll gap to 0.6mm and a roll revolution speed to 100rpm. The pulverized particles of the dry powder were classified by using a vibrating screen having openings of $550\mu m$ and a vibrating screen having openings of $650\mu m$, thereby obtaining a silica powder having an average particle diameter $D_{50}$ of $590\mu m$.

Finally, the pulverized powder was charged into a vessel for firing, then the vessel for firing was brought into a firing furnace, and firing was conducted by flowing argon at a flow rate of 1OL/min through within the firing furnace, and by holding the powder at a temperature of 1,200°C for 48 hours, thereby obtaining a synthetic amorphous silica powder. This silica powder without applying a spheroidizing treatment thereto, was made to be Comparative Example 7.

<Comparative Example 8>

Firstly, 13mols of ultrapure water was prepared per 1mol of fumed silica having an average particle diameter $D_{50}$ of $0.020\mu m$ and a specific surface area of $90m^2/g$. The prepared ultrapure water was charged into a vessel, and then the fumed silica was added thereinto, with stirring while keeping the temperature at 25°C in an atmosphere of nitrogen. After addition of the fumed silica, stirring was continued for 3 hours, thereby producing a siliceous gel. At this time, the stirring speed was set to be 30rpm. Next, the siliceous gel was transferred into a container for drying which was brought into a drier, and the siliceous gel was dried for 12 hours at a temperature of 300°C while flowingnitrogen through within the drier at a flow rate of 10L/min, thereby obtaining a dry powder. This dry powder was then taken out of the drier, and pulverized by a roll crusher. At this time, pulverizing was conducted by adjusting a roll gap to 0.9mm and a roll revolution speed to 150rpm. The pulverized particles of the dry powder were classified by using a vibrating screen having openings of $850\mu m$ and a vibrating screen having openings of $950\mu m$, thereby obtaining a silica powder having an average particle diameter $D_{50}$ of $895\mu m$.

Finally, the pulverized powder was charged into a vessel for firing, then the vessel for firing was brought into a firing furnace, and firing was conducted by flowing argon at a flow rate of 10L/min through within the firing furnace, and by holding the powder at a temperature of 1,200°C for 48 hours, thereby obtaining a synthetic amorphous silica powder. This silica powder without applying a spheroidizing treatment thereto, was made to be Comparative Example 8.

[Table 1]

| | Silica powder | | Spheroidizing treatment condition | | | | |
|---|---|---|---|---|---|---|---|
| | Raw material | Average particle diameter D50 [$\mu$m] | frequency of high-frequency wave [MHz] | High-frequency power [kW] | Ar gas flow rate [L/min] | Oxygen flow rate [L/min] | Raw powder supplying rate [kg/hr] |
| Example 1 | Silicon tetrachloride | 112 | 3 | 30 | 15 | 20 | 1.7 |
| Example 2 | Tetramethoxysilane | 120 | 4 | 60 | 30 | 35 | 3.8 |
| Example 3 | Fumed silica | 417 | 5 | 90 | 40 | 80 | 8.1 |
| Example 4 | Silicon tetrachloride | 907 | 5 | 120 | 60 | 120 | 18.6 |
| Comparative Example 1 | Silicon tetrachloride | 112 | 5 | 120 | 60 | 130 | 18.7 |
| Comparative Example 2 | Tetramethoxysilane | 120 | 5 | 90 | 30 | 65 | 14.3 |
| Comparative Example 3 | Fumed silica | 417 | 5 | 60 | 20 | 60 | 8.7 |
| Comparative Example 4 | Fumed silica | 417 | 4 | 30 | 10 | 40 | 4.5 |

(continued)

| | | Silica powder | | Spheroidizing treatment condition | | | | |
|---|---|---|---|---|---|---|---|---|
| | Raw material | Average particle diameter D50 [μm] | frequency of high-frequency wave [MHz] | High-frequency power [kW] | Ar gas flow rate [L/min] | Oxygen flow rate [L/min] | Raw powder supplying rate [kg/hr] |
| Comparative Example 5 | Silicon tetrachloride | 907 | 4 | 30 | 15 | 50 | 5.7 |
| Comparative Example 6 | Silicon tetrachloride | 100 | - | - | - | - | - |
| Comparative Example 7 | Tetramethoxysilane | 590 | - | - | - | - | - |
| Comparative Example 8 | Fumed silica | 895 | - | - | - | - | - |

Measured for the powders obtained in Examples 1 to 4 and Comparative Examples 1 to 8, were an average particle diameter $D_{50}$, a BET specific surface area, a theoretical specific surface area, a quotient represented by "BET specific surface area/theoretical specific surface arena", a real density, anintra-particulate porosity, and a spheroidization ratio, by those techniques to be described hereinafter. These results are listed in Table 2.

(1) Average particle diameter $D_{50}$: this was obtained by calculating an average value of medians of particle distributions (diameter) measured three times by Laser Diffraction/Scattering Particle Size Distribution Analyzer (Model Name: HORIBA LA-950).

(2) BET specific surface area: this was measured by a BET three-point method by using a measuring apparatus (QUANTACHROME AUTOSORB-1 MP) . The BET three-point method is configured to obtain a gradient A from adsorbed nitrogen amounts at three points of relative pressure, thereby obtaining a specific surface area value based on a BET equation. Measurement of adsorbed nitrogen amounts was conducted under a condition of 150°C for 60 minutes.

(3) Theoretical specific surface area: this was calculated from the following equation (2), assuming that D represents an average particle diameter $D_{50}$ of a powder, and $\rho$ represents a real density of 2.2g/cm$^3$ in the following equation (1):

$$\text{Theoretical specific surface area} = 6/(D \times \rho) \qquad (1)$$

$$\text{Theoretical specific surface area of powder} = 2.73/D_{50} \qquad (2)$$

(3) Quotient of "BET specific surface area/theoretical specific surface area": this was calculated from the BET specific surface area and the theoretical specific surface area measured and obtained in the above manners , respectively.

(4) Real density: this was calculated as an average value of true densities obtained by conducting a real density measurement three times in conformity to JIS R7212: Testing Methods for Carbon Blocks, (d) Measurement of absolute specific gravity.

(5) Intra-particulate porosity : the obtained powder was embedded in a resin which was then ground to expose cross sections of powder particles. The cross sections of powder particles were observed by a SEM (scanning electron microscope). Further, the intra-particulate porosity was calculated from the following equation (4), by measuring cross-sectional areas of 50 powder particles, and areas of spaces in the particles, if present:

$$\text{Intra-particulate porosity=total area of spaces in}$$

$$\text{particles/total cross-sectional area of particles} \quad (4)$$

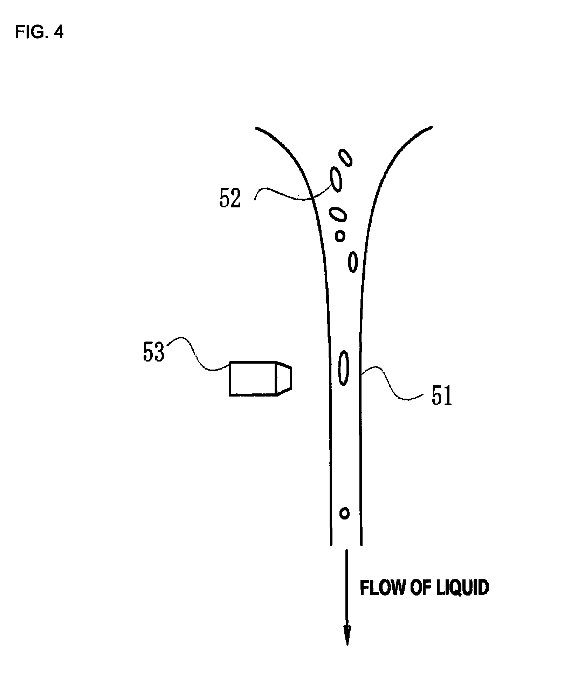

(6) Spheroidization ratio and Circularity: these were measured two times by a particle size/shape distribution measuring device (PITA-1 manufactured by SEISHIN ENTERPRISE Co., Ltd.) shown in FIG. 4, respectively, and average values thereof were calculated, respectively. Specifically, powder particles were firstly dispersed into a liquid, which was then flowed through a planar elongational flow cell 51. Recorded as images by an objective lens 53 were 200 powder particles 52 moving through within the planar elongational flow cell 51, respectively, thereby calculating a circularity from the recorded images and the following equation (3). In the equation (3), S represents an area of each recordedparticle image in a projection view, and L represents a perimeter of the particle image in the projection view. The circularity of the applicable powder was provided as an average value of circularities of 200 particles calculated in the above manner.
$$\text{Circularity=}4\pi S/L^2 \quad (3)$$

The spheroidization ratio is a ratio of those powder particles included in 200 powder particles, which have circularities falling into a range between 0.60 and 1.00.

<Comparative test and Evaluation 1>

The powders obtained in Examples 1 to 4 and Comparative Examples 1 to 8 were used to fabricate rectangular parallelepiped block materials of length 20mm×width 20mmxheight 40mm, respectively, in a manner to evaluate the number of gas bubbles caused in each block material. These results are listed in Table 2. Specifically, each block material was fabricated by: introducing the applicable powder into a carbon crucible; heating it by a carbon heater to 2,200°C in a vacuum atmosphere at $2.0 \times 10^4$ Pa; and holding it for 48 hours. Conducted for this block material was a heat treatment at a temperature of 1,600°C for 48 hours in a vacuum atmosphere of $5.0 \times 10^2$ Pa. After the heat treatment, the block material was cut out at a height of 20mm to expose a rectangular cross section of 20mmx20mm which was then ground, in a manner to evaluate the number of gas bubbles observed in a region having a depth of 2mm from the surface of the block material, and a width of 2mm.
[Table 2]

| | Average particle diameter D60[μm] | BET specific surface area [m2/g] | Theoretical specific surface [m2/g] | Quotient of BET specific surface area/ theoretical specific surface area | Real density [g/cm³] | Intra-particulate porosity | Circularity | Spheroidization ratio | Number of gas bubbles [count] |
|---|---|---|---|---|---|---|---|---|---|
| Example 1 | 89 | 0.031 | 0.031 | 1.00 | 2.20 | 0.00 | 1.02 | 0.92 | 0 |
| Example 2 | 95 | 0.035 | 0.029 | 1.21 | 2.20 | 0.00 | 0.89 | 0.74 | 12 |
| Example 3 | 321 | 0.013 | 0.009 | 1.44 | 2.17 | 0.01 | 0.77 | 0.56 | 48 |
| Example 4 | 717 | 0.007 | 0.004 | 1.75 | 2.11 | 0.04 | 0.54 | 0.21 | 65 |
| Comparative Example 1 | 99 | 0.056 | 0.028 | 2.00 | 2.19 | 0.00 | 0.53 | 0.20 | 92 |
| Comparative Example 2 | 93 | 0.044 | 0.029 | 1.52 | 2.04 | 0.05 | 0.73 | 0.50 | 118 |
| Comparative Example 3 | 348 | 0.013 | 0.008 | 1.63 | 2.16 | 0.09 | 0.67 | 0.41 | 102 |
| Comparative Example 4 | 386 | 0.015 | 0.007 | 2.14 | 2.13 | 0.04 | 0.41 | 0.21 | 105 |
| Comparative Example 5 | 684 | 0.008 | 0.004 | 2.00 | 2.11 | 0.05 | 0.51 | 0.18 | 95 |
| Comparative Example 6 | 70 | 0.142 | 0.039 | 3.64 | 2.19 | 0.01 | - | - | 97 |
| Comparative Example 7 | 412 | 0.019 | 0.007 | 2.71 | 2.20 | 0.00 | - | - | 83 |
| Comparative Example 8 | 627 | 0.017 | 0.004 | 4.25 | 2.8 | 0.02 | - | - | 115 |

As apparent from Table 1 and Table 2, it is seen that the blocks fabricated by using the powders of Examples 1 to 4, respectively, were remarkably decreased in the number of caused gas bubbles, as compared to the blocks fabricated by using the powders of Comparative Examples 6 to 8 produced by adopting conventional powders without subjecting to a spheroidizing treatment, respectively. Further, it is seen that, comparing Examples 1 to 4 with Comparative Examples 1 to 5, Examples 1 to 4 were remarkably decreased in the number of caused gas bubbles as compared to Comparative Examples 1 to 5 though these Examples and Comparative Examples were each subjected to a spheroidizing treatment.

<Comparative test and Evaluation 2>

Impurity concentrations of the powders obtained in Examples 1 to 4 and Comparative Examples 1 to 8 were analyzed or measured by the following techniques (1) to (5). The results thereof are listed in Table 3.
(1) Na, K, Ca, Fe, Al, and P: Each powder was thermally decomposed with hydrofluoric acid and sulfuric acid, in a manner to prepare a constant-volume liquid by using dilute nitric acid after thermal condensation. This constant-volume liquid was subjected to analysis by a High-Frequency Inductive Coupling Plasma Mass Spectrometer (Model Name: SPQ9000 of SII NanoTechnology Inc.).
(2) B: Each powder was thermally decomposed with hydrofluoric acid, in a manner to prepare a constant-volume liquid by using ultrapure water after thermal condensation. This constant-volume liquid was subjected to analysis by a High-Frequency Inductive Coupling Plasma Mass Spectrometer (Model Name: SPQ9000 of SII NanoTechnology Inc.)
(3) C: Added to each powder were iron, tungsten, and tin as combustion improvers, to thereby conduct analysis by a high-frequency furnace combustion infrared absorption method (Model Name: HORIBA EMIA-920V).
(4) Cl: Each powder was mixed with ultrapure water, in a manner to cause Cl to leach out of the former into the latter, under ultrasonic waves. The synthetic amorphous silica powder and the leach solution were separated from each other bya centrifuge, and the separatedleach solution was subjected to conduction of analysis by ion chromatography (Model Name: Dionex DX-500).
(5) OH: Measurement therefor was conducted by a peak height near 3,660cm$^{-1}$ by Fourier Transformation Infrared spectrophotometer (Model Name: ThermoFischer Nicolet 4700FT-IR).
[Table 3]

| | Impurity concentration of powder [wt.ppm] | | | | | | | | | |
| --- | --- | --- | --- | --- | --- | --- | --- | --- | --- | --- |
| | Na | K | Ca | Fe | Al | B | C | P | Cl | OH |
| Example 1 | <0.01 | <0.010 | 0.05 | 0.1 | 0.1 | <0.01 | <1 | <0.01 | <1 | 25 |
| Example 2 | <0.01 | <0.01 | 0.05 | 0.1 | 0.1 | <0.01 | 2 | <0.01 | <1 | 21 |
| Example 3 | <0.01 | <0.01 | 0.05 | 0.1 | 0.1 | <0.01 | <1 | <0.01 | 1 | 20 |
| Example 4 | <0,01 | <0.01 | 0.05 | 0.1 | 0.1 | <0.01 | <1 | <0.01 | <1 | 35 |
| Comparative Example 1 | <0.01 | <0.01 | 0.05 | 0.1 | 0.1 | <0.01 | <1 | <0.01 | <1 | 60 |
| Comparative Example 2 | <0.01 | <0.01 | 0.05 | 0.1 | 0.1 | <0.01 | 6 | <0.01 | <1 | 65 |
| Comparative Example 3 | <0,01 | <0.01 | 0.05 | 0.1 | 0.1 | <0.01 | <1 | <0.01 | 1 | 70 |
| Comparative Example 4 | <0.01 | <0.01 | 0.05 | 0.1 | 0.1 | <0.01 | <1 | <0.01 | 1 | 65 |
| Comparative Example 5 | <0.01 | 0.01 | 0.05 | 0.1 | 0.1 | <0.01 | <1 | <0.01 | <1 | 70 |
| Comparative Example 6 | <0.01 | <0.01 | 0.05 | 0.1 | 0.1 | <0.01 | <1 | <0.01 | <1 | 98 |
| Comparative Example 7 | <0.01 | <0.01 | 0.05 | 0.1 | 0.1 | <0.01 | 11 | <0.01 | <1 | 71 |

(continued)

| | Impurity concentration of powder [wt.ppm] | | | | | | | | | |
|---|---|---|---|---|---|---|---|---|---|---|
| | Na | K | Ca | Fe | Al | B | C | P | Cl | OH |
| Comparative Example 8 | <0.01 | <0.01 | 0.05 | 0.1 | 0.1 | <0.01 | <1 | <0.01 | 1 | 85 |

As apparent from Table 3, it is seen that the powders of Examples 1 to 4 were each low in concentration of hydroxyl group and carbon which possibly act as gas components acting as sources of generation or expansion of gas bubbles in a synthetic silica glass product at a high temperature and a reduced pressure, as compared to the powders of Comparative Examples 1 to 8.

INDUSTRIAL APPLICABILITY

The synthetic amorphous silica powder of the present invention is preferably usable as a raw material for manufacturing a synthetic silica glass product such as a crucible, jig, and the like to be used for single crystal production in semiconductor application.

**Claims**

1. A synthetic amorphous silica powder obtained by applying a spheroidizing treatment to a silica powder, and by subsequently firing it without cleaning;
   wherein the synthetic amorphous silica powder has:

   a quotient of 1.93 or less obtained by dividing a BET specific surface area of the powder by a theoretical specific surface area calculated from an average particle diameter $D_{50}$;
   a real density of 2.10g/cm$^3$ or more;
   an intra-particulate porosity of 0.05 or less;
   a circularity of 0.50 or more; and
   a spheroidization ratio of 0.20 or more; and
   wherein the synthetic amorphous silica powder comprises particles each having a surface carrying fine silica powder particles attached thereto.

FIG. 1

FIG. 2

SILICA POWDER

↓

SPHEROIDIZING
TREATMENT

↓

FIRING

↓

SYNTHETIC AMORPHOUS SILICA POWDER

FIG. 3

30

RAW POWDER

Ar, O$_2$ →

38

37

31
36
34

40

39

EXHAUST GAS

32

41

33

FIG. 4

FLOW OF LIQUID

FIG. 5

| **INTERNATIONAL SEARCH REPORT** | | International application No. |
|---|---|---|
| | | PCT/JP2010/072958 |

| A. CLASSIFICATION OF SUBJECT MATTER |
|---|
| *C01B33/18*(2006.01)i, *C03B20/00*(2006.01)i |
| According to International Patent Classification (IPC) or to both national classification and IPC |

| B. FIELDS SEARCHED |
|---|
| Minimum documentation searched (classification system followed by classification symbols) |
| C01B33/18, C03B20/00 |

| Documentation searched other than minimum documentation to the extent that such documents are included in the fields searched |
|---|
| Jitsuyo Shinan Koho      1922-1996    Jitsuyo Shinan Toroku Koho    1996-2011 |
| Kokai Jitsuyo Shinan Koho   1971-2011    Toroku Jitsuyo Shinan Koho    1994-2011 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2005-162593 A (Kiyoaki SHIRAISHI), 23 June 2005 (23.06.2005), entire text (Family: none) | 1 |
| A | JP 2008-297183 A (JGC Catalysts and Chemicals Ltd.), 11 December 2008 (11.12.2008), entire text (Family: none) | 1 |
| A | JP 2009-114010 A (JGC Catalysts and Chemicals Ltd.), 28 May 2009 (28.05.2009), entire text (Family: none) | 1 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 March, 2011 (28.03.11) | 05 April, 2011 (05.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4075848 A
- JP 62176929 A
- JP 3275527 A